# EUROPÄISCHE PATENTSCHRIFT

(11) **EP 0 968 114 B1**
(45) Veröffentlichungstag und Bekanntmachung des Hinweises auf die Patenterteilung: **06.02.2002**
(21) Anmeldenummer: 97909360.6
(22) Anmeldetag: 04.10.1997
(51) Int. Cl.: B62J 9/00

(54) **FAHRRADTASCHE**
BICYCLE BAG
SACOCHE DE BICYCLETTE

(30) Priorität: 01.04.1997 DE 19713406
(43) Veröffentlichungstag der Anmeldung: 05.01.2000
(73) Patentinhaber: Löhr GmbH, 59199 Bönen (DE)
(72) Erfinder: LÖHR, Hans-Gerhard, D-59069 Hamm (DE)
(74) Vertreter: Fleck, Hermann-Josef, Dr.-Ing.
(86) Internationale Anmeldenummer: EP9705455
(87) Internationale Veröffentlichungsnummer: WO9843871

(56) Entgegenhaltungen:
- CH-A- 222 107
- DE-A- 19 534 204

## Beschreibung

Die Erfindung bezieht sich auf eine Fahrradtasche mit einer an ihrer Rückwand angeordneten Koppelvorrichtung zum lösbaren Anbringen an einem an einem Fahrrad angeordneten Koppelabschnitt, wobei die Koppelvorrichtung mindestens ein Fenster aufweist, in dem Einhängeelemente für Aufnahmen des Koppelabschnittes ausgebildet sind.

Eine Fahrradtasche dieser Art geht aus der DE 195 34 204 A1, der US 4,433,802, der US 4,353,490, der FR 1 127 921 sowie der DE 39 27 086 A1 hervor. Bei allen diesen bekannten Fahrradtaschen weist die Koppelvorrichtung außen auf der Rückwand als zusätzliche Elemente aufgebrachte bzw. an dieser vorstehende Koppelelemente auf. Entsprechendes gilt auch für die insgesamt aus steifem Material ausgebildete behälterartige Tasche gemäß der WO 94/11233. Mit dieser Ausbildung der Koppelvorrichtung ist u.a. auch das Aussehen beeinträchtigt, und es sind störende Elemente beim Tragen vorhanden.

Der Erfindung liegt die Aufgabe zugrunde, eine Fahrradtasche der eingangs genannten Art bereitzustellen, die bei einfachem Aufbau optisch und beim Gebrauch als Tasche durch die Koppelvorrichtung weitgehend unbeeinträchtigt ist.

Diese Aufgabe wird mit den Merkmalen des Anspruchs 1 gelöst. Hiernach ist also vorgesehen, dass das mindestens eine Fenster in einer flachen Verstärkungsplatte ausgebildet ist, die in der Rückwand der Fahrradtasche integriert und nach außen von einer Außenverkleidung unter Freilassen eines Ausschnitts über dem Fenster abgedeckt ist, und dass der Ausschnitt von außen mittels einer an der Rückwand vorgesehenen Abdeckung verschließbar ist und/oder mittels einer auf der Innenseite der Verstärkungsplatte vorgesehenen Innenverkleidung verschlossen ist.

Durch die Ausbildung des mindestens einen Fensters in der mit der Außenverkleidung abgedeckten Verstärkungsplatte der Rückwand ist die Koppelvorrichtung nach außen vollkommen flach ausgebildet und stört beim Tragen nicht. Die Abdeckung des Ausschnitts auf der Außenseite dient nicht nur zum Verschließen des Fensters und des Ausschnitts, sondern trägt außerdem zum guten Aussehen der Fahrradtasche bei. Auch durch die Innenverkleidung, die beispielsweise ein Innenfutter aus Stoff oder Kunststoff oder aber eine nach innen ausgebuchtete Abdeckung der Fenster sein kann, ist der Innenraum der Tasche nach außen gedichtet. Die Fenster können im einfachsten Fall z.B. vertikal ausgerichtete Langlöcher sein, deren obere Begrenzungsflächen als Einhängeelemente für hakenförmige Aufnahme des Koppelabschnitts dienen.

Ist vorgesehen, daß die Einhängeelemente als seitlich in den lichten Raum der Fensterfläche ragende Vorsprünge ausgebildet sind, so ergibt sich bei einfacher Ausgestaltung z.B. durch Stanzen oder einen Formungsprozeß eine gute Ankopplung an dem Koppelabschnitt, wobei zum Vermeiden von Kippschwingungen mehrere Einhängeelemente in vertikaler Richtung übereinander vorgesehen sein können.

Die z.B. durch einen einfachen Einhängevorgang angekoppelte Fahrradtasche kann gegen ein unbeabsichtigtes Lösen dadurch gesichert werden, daß die Verstärkungsplatte außerhalb des Fensters einen weiteren Durchbruch als Riegelaufnahme aufweist. In den Durchbruch kann mittels eines Rastmechanismus oder eines Schlüssels ein Riegel eingeführt werden.

Vorteilhafte Ausbildungen für die Abdeckung bestehen darin, daß die Abdeckung des Ausschnitts als wegklappbarer oder wegnehmbarer Lappen an der Außenverkleidung befestigt oder ein Teil derselben ist und daß die Abdeckung mit einem Verschließeiement versehen ist, das mit einem komplementären Verschließelement in lösbare Verbindung bringbar ist. Das Verschließelement kann dabei z.B. ein Reißverschluß, ein Druckknopf oder ein Klettverschluß sein. Auch können ein Reißverschluß und ein Klettband z.B. in der Weise kombiniert werden, daß horizontal ein Reißverschluß und vertikal das Klettband angeordnet ist.

Eine vorteilhafte Zusatzfunktion wird dadurch erzielt, daß die Abdeckung als flache Tasche oder als Gurtschlaufe ausgebildet ist. Dadurch kann auch das Aussehen vorteilhaft beeinflußt werden.

Verschiedene geeignete Aufbaumöglichkeiten bestehen darin, daß die Verstärkungsplatte in der Rückwand eingesteckt, eingenäht oder eingenietet ist.

Die Erfindung wird nachfolgend anhand eines Ausführungsbeispiels unter Bezugnahme auf die Zeichnungen näher erläutert. Es zeigen:
- Fig. 1: eine an einer Lenkstange angekoppelte Fahrradtasche in perspektivischer Ansicht,
- Fig. 2: einen Ausschnitt der an der Lenkstange angekoppelten Fahrradtasche nach Fig. 1 im Querschnitt und
- Fig. 3: Teile der in Fig. 1 gezeigten Ankopplungseinrichtung in Explosionsdarstellung.

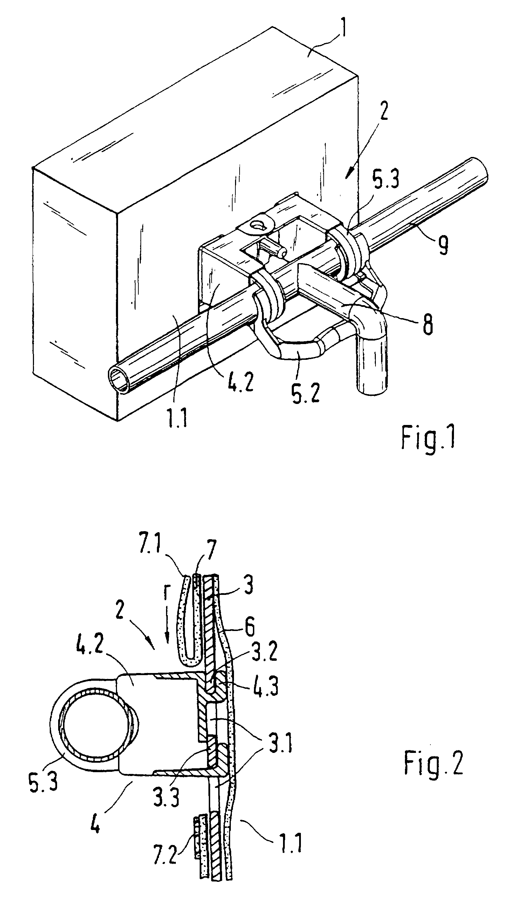

Wie Fig. 1 zeigt, ist eine (schematisch dargestellte) Fahrradtasche 1 mit ihrer Rückwand 1.1 an einem Koppelabschnitt 2 angekoppelt, der an einer Lenkstange 9 angebracht und mit einer Stützbrücke 5.2 eines Haltebügels 5 gegen ein Verdrehen an einem Lenkervorbau 8 abgestützt ist.

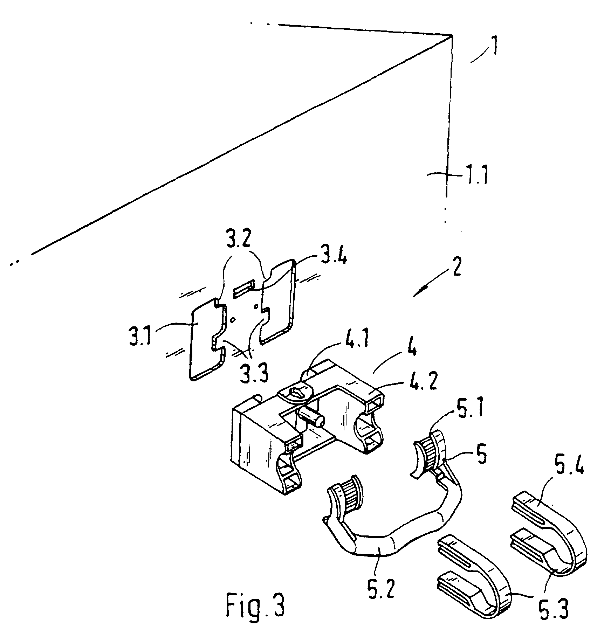

Der Koppelabschnitt 2 weist in seinem der Fahrradtasche 1 zugekehrten Bereich, wie auch aus den Fig. 2 und 3 ersichtlich ist, ein Koppelstück 4 mit einem Befestigungsabschnitt 4.2 auf, an dessen Vorderseite Hakenelemente 4.3 nach vorn und oben abstehen, die eine Aufnahme 4.1 bilden. In die Rückseite des Koppelstücks 4 sind Steckzapfen 5.4 einer Schelle 5.3 eingeführt, die auf ihrer Innenseite eine Zahnung trägt, um mit einer Zahnung 5.1 des Haltebügels 5 zusammenzuwirken und diesen unverdrehbar festzulegen.

In der Rückwand 1.1 der Fahrradtasche 1 ist, wie insbesondere aus Fig. 2 hervorgeht, eine Verstärkungsplatte 3 zwischen einer Innenverkleidung 6 und einer Außenverkleidung 7 eingebunden, beispielsweise eingenäht, eingesteckt oder eingenietet. Die Verstärkungsplatte kann z.B. aus stabilem Kunststoff oder Metall bestehen und, falls diese stabil genug ist, unmittelbar eine herkömmliche Versteifungsplatte sein oder diese ersetzen. In der Verstärkungsplatte sind zwei Fenster 3.1 ausgeschnitten oder ausgeformt, die an ihren benachbarten vertikalen Seiten nach innen in den lichten Fensterraum ragende, in der Fensterfläche liegende Einhängeelemente 3.2 und weitere Einhängeelemente 3.3 tragen. Wie die Fig. 2 zeigt, sitzen die Einhängeelemente 3.2 und die weiteren Einhängeelemente 3.3 im angekoppelten Zustand der Fahrradtasche 1 in der hinter den Hakenelementen 4.3 gebildeten Aufnahmen 4.1 des Koppelstücks 4. Dadurch ergibt sich eine kippsichere Ankopplung der Fahrradtasche 1.

Nach innen ist die Verstärkungsplatte 3 einschließlich der Fenster 3.1 mittels der Innenverkleidung 6 abgedeckt, so daß der Innenraum der Fahrradtasche 1 auch im Bereich der Fenster 3.1 geschlossen ist. Auf der Außenseite kann ein in der Außenverkleidung 7 im Bereich der Fenster gebildeter Ausschnitt mittels einer Abdeckung 7.1 verschlossen werden, wozu ein Verschließelemente der Abdeckung 7.1 mit einem weiteren Verschließelement 7.2 auf der Außenverkleidung 7 in Verbindung gebracht wird. Die Abdeckung 7.1 ist gemäß Fig. 2 ein hochgeklappter Lappen der Außenverkleidung 7, die rundum als Verschließelemente ein (nicht gezeigtes) Klettband trägt, das mit einem entsprechend angeordneten Klettband im Randbereich des Ausschnitts in Verbindung gebracht werden kann. Ähnlich lassen sich als Verschließelement und weiteres Schließelement 7.2 ein Reißverschluß, Druckknöpfe oder dgl. auch in geeigneter Kombination miteinander verwenden. Die Abdeckung 7.1 kann auch ein separat aufgesetztes Stück sein und kann auch als flache Tasche ausgebildet sein. Eine weitere Möglichkeit besteht darin, daß die Abdeckung gleichzeitig als Gurtchlaufe ausgebildet ist, die dann, um die erforderliche Tragkraft auszuüben, am unteren Rand des Ausschnitts fest verbunden ist und nach unten aufklappbar ist. Weitere ähnliche Gestaltungsmöglichkeiten der Abdeckung sind denkbar.

Als Innenverkleidung 6 kann alternativ auch eine nach innen ausgebuchtete Kappe auf der Innenseite der Verstärkungsplatte 3 vorgesehen sein, um die Öffnung der Fenster 3.1 zu verschließen.

Der beschriebene Aufbau der Fahrradtasche 1 ergibt somit bei einfacher Ausbildung eine flache Rückwand ohne zusätzliche außen aufgesetzte Halteelemente, wobei auch ein gutes Aussehen erzielt wird.

## Patentansprüche

1. Fahrradtasche mit einer an ihrer Rückwand (1.1) angeordneten Koppelvorrichtung zum lösbaren Anbringen an einem an einem Fahrrad angeordneten Koppelabschnitt (2), wobei die Koppelvorrichtung mindestens ein Fenster (3.1) aufweist, in dem Einhängeelemente (3.2, 3.3) für Aufnahmen (4.1) des Koppelabschnittes (2) ausgebildet sind,
**dadurch gekennzeichnet,**
**dass** das mindestens eine Fenster (3.1) in einer flachen Verstärkungsplatte (3) ausgebildet ist, die in der Rückwand (1.1) der Fahrradtasche (1) integriert und nach außen von einer Außenverkleidung (7) unter Freilassen eines Ausschnitts über dem Fenster (3.1) abgedeckt ist, und
**dass** der Ausschnitt von außen mittels einer an der Rückwand (1.1) vorgesehenen Abdeckung (7.1) verschließbar ist und/oder mittels einer auf der Innenseite der Verstärkungsplatte (3) vorgesehenen Innenverkleidung (6) verschlossen ist.

2. Fahrradtasche nach Anspruch 1,
**dadurch gekennzeichnet,**
**daß** die Einhängeelemente (3.2,3.3) als seitlich in den lichten Raum der Fensterfläche ragende Vorsprünge ausgebildet sind.

3. Fahrradtasche nach Anspruch 1 oder 2,
**dadurch gekennzeichnet,**
**daß** die Verstärkungsplatte (3) außerhalb des Fensters (3.1) einen weiteren Durchbruch (3.4) als Riegelaufnahme aufweist.

4. Fahrradtasche nach einem der Ansprüche 1 bis 3,
**dadurch gekennzeichnet,**
**daß** die Abdeckung (7.1) des Ausschnitts als wegklappbarer oder wegnehmbarer Lappen an der Außenverkleidung (7) befestigt oder ein Teil derselben ist und
**daß** die Abdeckung (7.1) mit einem Verschließelement versehen ist, das mit einem komplementären Verschließelement (7.2) in lösbare Verbindung bringbar ist.

5. Fahrradtasche nach einem der Ansprüche 1 bis 4,
**dadurch gekennzeichnet,**
**daß** die Abdeckung (7.1) als flache Tasche oder als Gurtschlaufe ausgebildet ist.

6. Fahrradtasche nach einem der Ansprüche 1 bis 5,
**dadurch gekennzeichnet,**
**daß** die Verstärkungsplatte (3) in der Rückwand (1.1) eingesteckt, eingenäht oder eingenietet ist.

## Claims

1. Bicycle bag having a coupling device which is arranged on its rear wall (1.1) and is intended for detachably attaching it to a coupling section (2) arranged on a bicycle, the coupling device having at least one aperture (3.1) in which fitting elements (3.2, 3.3) for retaining means (4.1) of the coupling section (2) are formed, **characterized in that** the at least one aperture (3.1) is formed in a flat reinforcing plate (3) which is integrated in the rear wall (1.1) of the bicycle bag (1) and is covered towards the outside by an outer lining (7) with a cutout over the aperture (3.1) being left free, and **in that** the cutout can be closed from the outside by means of a covering (7.1) provided at the rear wall (1.1) and/or is closed by means of an inner lining (6) provided on the inside of the reinforcing plate (3).

2. Bicycle bag according to Claim 1, **characterized in that** the fitting elements (3.2, 3.3) are formed as projections protruding laterally into the clear space of the aperture surface.

3. Bicycle bag according to Claim 1 or 2, **characterized in that** the reinforcing plate (3) has a further opening (3.4) outside the aperture (3.1) as a bolt-retaining means.

4. Bicycle bag according to one of Claims 1 to 3, **characterized in that** the covering (7.1) of the cutout is fastened to the outer lining (7) as a tab which can be swung away or taken away, or is part of the said outer lining, and **in that** the covering (7.1) is provided with a closing element which can be brought into a detachable connection with a complementary closing element (7.2).

5. Bicycle bag according to one of Claims 1 to 4, **characterized in that** the covering (7.1) is designed as a flat pocket or as a belt loop.

6. Bicycle bag according to one of Claims 1 to 5, **characterized in that** the reinforcing plate (3) is plugged, sewn or riveted into the rear wall (1.1).

## Revendications

1. Sacoche de bicyclette comprenant un dispositif d'attache disposé à sa partie arrière (1.1) pour le montage amovible sur une portion d'attache (2) disposée sur une bicyclette, le dispositif d'attache présentant au moins une fenêtre (3.1) dans laquelle des éléments d'accrochage (3.2, 3.3) sont formés pour recevoir (4:1) la portion d'attache (2), **caractérisée en ce que** l'au moins une fenêtre (3.1) est formée dans une plaque de renforcement (3) qui est intégrée à la partie arrière (1.1) de la sacoche de bicyclette (1) et qui est recouverte vers l'extérieur par un revêtement extérieur (7) tout en laissant libre une section par-dessus la fenêtre (3.1), et **en ce que** la section peut être fermée depuis l'extérieur au moyen d'un recouvrement (7.1) prévu à la partie arrière (1.1) et/ou est fermée au moyen d'un revêtement interne (6) prévu sur le côté interne de la plaque de renforcement (3).

2. Sacoche de bicyclette selon la revendication 1, **caractérisée en ce que** les éléments d'accrochage (3.2, 3.3) sont formés en tant que saillies se projetant latéralement dans l'espace intérieur de la surface de fenêtre.

3. Sacoche de bicyclette selon la revendication 1 ou 2, **caractérisée en ce que** la plaque de renforcement (3) présente, en plus de la fenêtre (3.1), une autre ouverture (3.4) servant de logement pour un verrou.

4. Sacoche de bicyclette selon l'une quelconque des revendications 1 à 3, **caractérisée en ce que** le recouvrement (7.1) de la section servant de languette rabattable ou amovible est fixée sur le revêtement extérieur (7) ou en constitue une partie et **en ce que** le recouvrement (7.1) est pourvu d'un élément de fermeture qui peut être connectée de manière amovible à un élément de fermeture complémentaire (7.2).

5. Sacoche de bicyclette selon l'une quelconque des revendications 1 à 4, **caractérisée en ce que** le recouvrement (7.1) est formé en tant que sacoche plate ou en tant que boucle de sangle.

6. Sacoche de bicyclette selon l'une quelconque des revendications 1 à 5, **caractérisée en ce que** la plaque de renforcement (3) est enfichée, cousue ou rivetée dans la partie arrière (1.1).
